(19) Europäisches Patentamt
European Patent Office
Office européen des brevets

(11) **EP 1 816 449 B1**

(12) **EUROPÄISCHE PATENTSCHRIFT**

(45) Veröffentlichungstag und Bekanntmachung des Hinweises auf die Patenterteilung:
**10.04.2019 Patentblatt 2019/15**

(51) Int Cl.:
***G01F 23/296*** *(2006.01)*     ***G01F 23/00*** *(2006.01)*
***C02F 1/00*** *(2006.01)*

(21) Anmeldenummer: **06101319.9**

(22) Anmeldetag: **06.02.2006**

(54) **Schlammspiegelsonde, Sedimentationsanlage und Verfahren zur Bestimmung des Schlammspiegels**

Sludge bed level probe, sedimentation unit and method for determining the sludge bed level

Sonde de niveau de boue, dispositif de sédimentation et procédé destiné à la détermination du niveau de boue

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**08.08.2007 Patentblatt 2007/32**

(73) Patentinhaber: **Hach Lange GmbH**
**14163 Berlin (DE)**

(72) Erfinder:
- **Battefeld, Manfred**
  **40211 Düsseldorf (DE)**
- **Jonak, Andreas**
  **40667 Meerbusch (DE)**

- **Heidemanns, Lothar**
  **41352 Korschenbroich (DE)**
- **Leyer, Axel**
  **41199 Mönchengladbach (DE)**
- **Schuster, Michael**
  **41462 Neuss (DE)**

(74) Vertreter: **Patentanwälte ter Smitten Eberlein-Van Hoof Rütten**
**Partnerschaftsgesellschaft mbB**
**Burgunderstraße 29**
**40549 Düsseldorf (DE)**

(56) Entgegenhaltungen:
**EP-A- 0 437 872**     **EP-A- 0 901 020**
**DE-A1- 3 329 215**     **US-A- 5 072 615**
**US-A- 5 184 510**

EP 1 816 449 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf eine Ultraschall-Schlammspiegelsonde mit einem von einer Haltevorrichtung gehaltenen und nach unten in eine Flüssigkeit hängenden Schlammspiegel-Ultraschallmesskopf, auf eine Sedimentationsanlage mit einer Schlammspiegelsonde und auf ein Verfahren zur Schlammspiegel-Bestimmung.

Ultraschall-Schlammspiegelsonden sind Messgeräte zur Ermittlung des Schlammspiegels in klaren bis stark getrübten Medien, insbesondere Abwasser. Sie dienen der Überwachung der Höhe bzw. Entfernung der Trennschicht zwischen der Flüssigkeit und den nach unten abgesetzten und abgesunkenen Feststoffen, also der Höhe des Schlammspiegels über dem Boden oder der Entfernung des Schlammspiegels zu einem Ultraschallmesskopf der Schlammspiegelsonde. Derartige Schlammspiegelsonden werden in der Abwasser- und Trinkwasseraufbereitung eingesetzt. Die Messung der Höhe des Schlammspiegels bzw. der Entfernung des Schlammspiegels von dem Ultraschallmesskopf wird über die Laufzeit eines Ultraschallsignals ermittelt. Eine derartige Schlammspiegelsonde ist aus EP 0 901 020 A2 bekannt.

Schlammspiegelsonden werden in der Regel in Absetzbecken eingesetzt, in denen die Abwasser-Flüssigkeit von den Feststoffen durch Schwerkraft getrennt wird. Feststoffe, die schwerer als die Flüssigkeit, also in der Regel Wasser, sind, sinken zum Boden herab und bilden dort eine Schlammschicht, deren obere Grenzschicht den Schlammspiegel bildet. Feststoffe, die leichter als Wasser sind, steigen zur Flüssigkeitsoberfläche auf.

Die abgesetzten Feststoffe müssen regelmäßig aus dem Absetzbecken entfernt werden. Hierzu werden in Längsbecken sog. Balkenräumer verwendet. Ein Balkenräumer weist mehrere sich über die Beckenbreite erstreckende Räumbalken auf, die endseitig jeweils an einer Kette befestigt sind. Die Balken werden über den Beckenboden gezogen, wobei sie die auf den Boden abgesunkenen Feststoffe vor sich her zu einem an einem Beckenlängsende befindlichen Trichter schieben, aus dem die Feststoffe schließlich abgepumpt werden. Die Balken steigen dann entlang einer Beckenstirnwand nach oben und laufen entlang der Wasseroberfläche in Beckenlängsrichtung zurück, wobei sie die aufgestiegenen schwimmenden Feststoffe zum gegenüberliegenden Beckenlängsende befördern.

Der Balken kollidiert dabei zwangsläufig mit der Schlammspiegelsonde, deren Ultraschallmesskopf zur Schlammspiegel-Bestimmung senkrecht herabhängend in die Flüssigkeit eingetaucht sein muss. Die Schlammspiegelsonde hängt an einem schwenkbaren Gestänge, so dass sie bei der Kollision dem Balken ausweichen kann. Die Schlammspiegelsonde kann wegen ihrer Schwenkbarkeit aber auch durch andere Einflüsse, beispielsweise durch Wind oder Strömungen, aus ihrer senkrechten Lage bewegt werden. Sobald der Ultraschallmesskopf nicht mehr senkrecht steht, wird die Entfernung zum Schlammspiegel nicht mehr senkrecht gemessen, sondern in einem Neigungswinkel, der der Raumlage des Ultraschallmesskopfes bzw. seiner Axialen zur Vertikalen entspricht. Die von einem nicht in der Vertikalen, d.h. nicht in seiner Sollposition stehenden Ultraschallmesskopf gelieferten Messwerte geben nicht die tatsächliche Trennschicht-Höhe bzw. Schlammspiegel-Entfernung an, sondern stellen wegen der nicht-vertikalen Messachse Fehlmessungen dar, die einer weiteren Auswertung nicht zugeführt werden sollten.

Aus DE 33 292 15 A1 ist ein Positionssensor bekannt, der das Höhenniveau des Ultraschallmesskopfes ermittelt.

Aus EP 0 437 872 A2 ist eine Vorrichtung zur Durchflussmessung bekannt, bei der ein Lagesensor die Neigung eines geneigten Rückflussrohres zur Durchflussmessung bestimmt.

Aufgabe der Erfindung ist es, eine Schlammspiegelsonde, eine Sedimentationsanlage bzw. ein Schlammspiegel-Bestimmungsverfahren zur fehlerfreien Bestimmung der Schlammspiegel-Höhe zu schaffen.

Diese Aufgabe wird erfindungsgemäß gelöst mit den Merkmalen der Ansprüche 1, 6 bzw. 7.

Erfindungsgemäß ist dem Ultraschallmesskopf ein Lagesensor zugeordnet, der die Raumlage des Ultraschallmesskopfes bestimmt. Mit Hilfe des Lagesensors kann daher jederzeit bzw. kontinuierlich die Lage des Ultraschallmesskopfes im Raum bestimmt werden. Es kann jederzeit festgestellt werden, ob der Ultraschallmesskopf vertikal steht, d. h., ob die Messachse bzw. die Axiale des Ultraschallmesskopfes vertikal steht oder nicht.

Mit dem mit dem Ultraschallmesskopf mechanisch starr verbundenen Lagesensor ist es möglich, jede Nicht-Vertikalität des Ultraschallmesskopfes unmittelbar und verzögerungsfrei festzustellen und die während seiner Nicht-Vertikalität generierten Messsignale entsprechend zu korrigieren oder keiner weiteren Auswertung zuzuführen. Auf diese Weise kann insbesondere in Absetzbecken mit Balkenräumer vermieden werden, dass die durch die regelmäßigen und unvermeidlichen Kollisionen der Räumbalken mit dem Ultraschallmesskopf verursachten unbrauchbaren Messwerte unkorrigiert oder überhaupt in eine weitere Auswertung eingehen. Zur Austastung der durch die Balkenräumer-Kollisionen verursachten unbrauchbaren Entfernungs-Messwerte ist es nicht mehr erforderlich, die Position des Balkenräumers zu bestimmen, mit Hilfe mathematischer oder statistischer Verfahren fehlerhafte Entfernungs-Messwerte zu ermitteln oder andere aufwendige Verfahren und Vorrichtungen zur Identifizierung unbrauchbarer Entfernungs-Messwerte oder zur Kollisions-Vermeidung einzusetzen.

Vorzugsweise ist ein Auswertemodul vorgesehen, das die von dem Ultraschallmesskopf gelieferten Entfernungs-Messwerte nicht auswertet, wenn der Raumlage-Messwert $\alpha$ oberhalb eines in einem Grenz-

lagewert-Speicher abgelegten Grenzlagewertes $\alpha_G$ liegt. Die Größe des in dem Grenzlagewert-Speicher abgelegten Grenzlagewertes $\alpha_G$ wird durch eine Vielzahl von Faktoren beeinflusst, beispielsweise durch die gewünschte Genauigkeit der Schlammspiegel-Bestimmung, durch die Häufigkeit und Stärke der die vertikale Lage des Ultraschallmesskopfes störenden Einflüsse etc. Der Grenzlagewert $\alpha_G$, ab dessen Erreichen die Entfernungs-Messwerte des Ultraschallmesskopfes nicht mehr ausgewertet werden, muss nicht unbedingt identisch sein mit dem Grenzlagewert, ab dessen Unterschreitung die Entfernungs-Messwerte wieder ausgewertet werden. Auf diese Weise kann eine Hysterese eingerichtet werden, die ein ständiges Pendeln zwischen Nicht-Auswertung und Auswertung vermeidet, wenn der Ultraschallmesskopf z. B. aufgrund einer Strömung ständig in einem kritischen Raumlage-Bereich steht.

In einem bevorzugten Ausführungsbeispiel ist ein Auswertemodul vorgesehen, in dem der von dem Ultraschallmesskopf gelieferte Entfernungs-Messwert I' mit Hilfe des von dem Lagesensor gelieferten Raumlage-Messwertes $\alpha$ zu einem korrigierten Entfernungs-Messwert I korrigiert wird, nach der Beziehung:

$$I = I' \cdot \cos \alpha$$

Durch die auf diese Weise durchgeführte Korrektur wird die Schlammspiegel-Entfernung bzw. die Höhe der Trennschicht über dem Beckenboden erheblich genauer ermittelt, sobald sich die Schlammspiegelsonde nicht in einer exakt vertikalen Position befindet. Auf diese Weise werden alle für eine weitere Auswertung grundsätzlich zugelassenen Entfernungs-Messwerte spürbar genauer.

Schon bei einem Raumlage-Messwert $\alpha$ von 25° beträgt die geometrische Ungenauigkeit bei einem Entfernungs-Messwert von 4 m ca. 0,35 m, was bei der sog. Dynamischen Schlammspiegel-Bestimmung zur Bestimmung des Intensitäts-Maximums bereits dem hierbei am Beckenboden ausgeblendeten Bereich entspricht. Daher ist die beschriebene Korrektur bei Anwendung der Dynamischen Schlammspiegel-Bestimmung praktisch unverzichtbar. Theoretisch können auch die Entfernungsmesswerte ausgewertet werden, die bei einer relativ starken Neigung der Schlammspiegelsonde ermittelt werden, so dass auf eine Austastung derartiger Messwerte völlig verzichtet werden könnte. Allerdings sind die Entfernungs-Messwerte oberhalb eines kritischen Grenzlagewertes aufgrund verschiedener physikalischer Einflüsse relativ ungenau. Die Entfernungs-Messwert-Korrektur eignet sich daher besonders in Verbindung mit der Austastung von Entfernungs-Messwerten bei einer Raumlage oberhalb eines Grenzlagewertes.

Vorzugsweise beträgt der Grenzlagewert maximal 25° und in besonders bevorzugter Ausführung maximal 15° gegenüber der Vertikalen. Bei Grenzlagewerten oberhalb von 25° werden die geometrischen Fehler und die Messungenauigkeiten so groß, dass die Entfernungs-Messwerte grob fehlerhaft sind und auch nicht mehr zuverlässig und mit erforderlicher Genauigkeit korrigierbar sind.

Vorzugsweise ist dem Auswertemodul ein Zeitgeber zugeordnet, der durch das Überschreiten des Grenzlagewertes gestartet wird und für eine festgelegte Zeitdauer läuft, wobei das Auswertemodul eine Fehlermeldung ausgibt, wenn nach der festgelegten Zeitdauer der Raumlage-Messwert oberhalb des Grenzlagewertes liegt. Die festgelegte Zeitdauer wird so gewählt, dass unter regulären Umständen die Raumlage des Ultraschallmesskopfes nach einer kurzen mechanischen Störung längst wieder unterhalb des Grenzlagewertes sein müsste, beispielsweise nach einer Kollision mit einem Räumbalken. Wenn der Raumlage-Messwert nach der festgelegten Zeitdauer noch oberhalb des Grenzlagewertes liegt, kann unter Umständen eine dauerhafte Störung vermutet werden. Durch die Fehlermeldung wird eine schnelle Überprüfung bzw. Beseitigung der dauerhaften Lagestörung ermöglicht.

Gemäß eines nebengeordneten und auf eine Sedimentationsanlage gerichteten Anspruches sind ein Absetzbecken, ein Balkenräumer und eine Ultraschall-Schlammspiegelsonde vorgesehen, die in das Absetzbecken hineingehängt ist, wobei die Schlammspiegelsonde die vorbeschriebenen Merkmale aufweist.

Gemäß einem nebengeordneten Verfahrensanspruch zum Bestimmen des Schlammspiegels in einem Absetzbecken einer Sedimentationsanlage, die einen Balkenräumer und eine Ultraschall-Schlammspiegelsonde nach einem der auf die Schlammspiegelsonde gerichteten Ansprüche aufweist, wobei die Schlammspiegelsonde in das Becken hineingehängt ist, sind folgende Verfahrensschritte vorgesehen:

- kontinuierliche Bestimmung des Schlammspiegels durch Auswertung der Entfernungs-Messwerte,

- kontinuierliche Bestimmung der Schlammspiegelsonden-Raumlage aus den Raumlage-Messwerten des dem Ultraschallmesskopf fest zugeordneten Lagesensors, und

- Austasten der Entfernungs-Messwerte, wenn der Raumlage-Messwerte einen festgelegten Grenzlagewert überschreitet.

Auf diese Weise wird für Sedimentationsanlagen mit einem Balkenräumer in einem Absetzbecken ein zuverlässiges Verfahren geschaffen, mit dem die durch die Kollisionen der Räumbalken mit der Schlammspiegelsonde verursachten und für die Bestimmung der Schlammspiegelhöhe unbrauchbaren Entfernungs-Messwerte zuverlässig ausgetastet werden können.

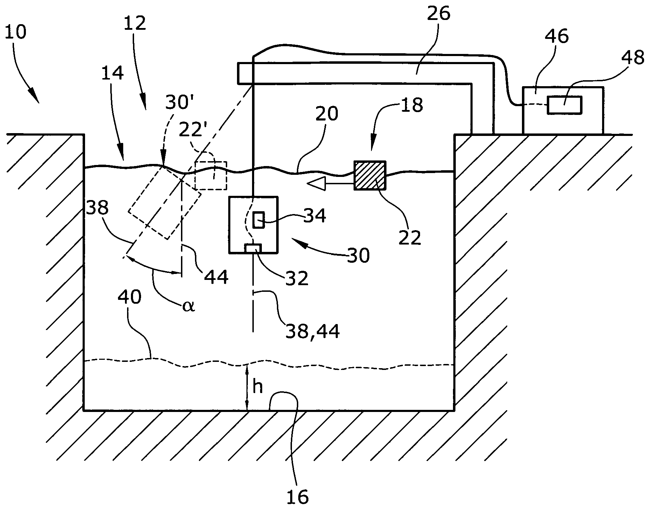

Im Folgenden wird unter Bezugnahme auf die Zeichnung ein Ausführungsbeispiel der Erfindung näher erläutert.

Die Figur zeigt eine Sedimentationsanlage mit einem Absetzbecken, einem Balkenräumer und einer Ultraschall-Schlammspiegelsonde im Längsschnitt.

In der Figur ist eine Sedimentationsanlage 10 dargestellt, die ein Absetzbecken 12 aufweist, das mit Abwasser gefüllt ist. Das Abwasser enthält eine Flüssigkeit 14 und Feststoffe, die aufgrund ihres Gewichtes auf den Boden 16 des Absetzbeckens 12 absinken oder an die Oberfläche 20 der Abwasser-Flüssigkeit 14 aufsteigen.

Der Sedimentationsanlage 10 ist ein Balkenräumer 18 zugeordnet, der im Bereich der Flüssigkeits-Oberfläche 20 auf der Oberfläche schwimmende Feststoffe räumt und auf dem Rückweg über dem Beckenboden 16 laufend die abgesunkenen Feststoffe in Richtung eines nicht dargestellten Trichters zum Abpumpen der Feststoffe befördert. Der Balkenräumer 18 wird von mehreren Balken 22 gebildet, die durch eine geschlossene Kette miteinander verbunden sind und durch eine geeignete Antriebsvorrichtung verfahren werden.

An einer balkenartigen Haltevorrichtung 26 hängt eine Schlammspiegelsonde 30 vertikal herab, die knapp unterhalb der Flüssigkeitsoberfläche 20 in die Flüssigkeit 14 eingetaucht ist. Die Schlammspiegelsonde 30 weist einen Ultraschallmesskopf 32 und einen Lagesensor 34 auf, die beide starr in einem flüssigkeitsdichten Schlammspiegelsonden-Gehäuse angeordnet sind.

Die Schlammspiegelsonde 30 ist mit einer flexiblen Leine oder Kette 36 an der Haltevorrichtung 26 aufgehängt. Die Schlammspiegelsonde kann jedoch auch an einer starren Stange aufgehängt sein, die schwenkbar an der Haltevorrichtung 26 befestigt ist.

Die Räumbalken 22 des Balkenräumers 18 bewegen sich im Betrieb entlang der Flüssigkeitsoberfläche 20 in einer Horizontalebene und kollidieren dabei zwangsläufig mit der Schlammspiegelsonde 30 und/oder ihrer Aufhängung. Der Moment der Kollision ist in der Figur mit unterbrochenen Linien dargestellt. Bei der Kollision wird die Schlammspiegelsonde 30' durch den Räumbalken 22' aus der vertikalen Raumlage herausbewegt, so dass die Schlammspiegelsonde 30 mit ihrer Längsachse 38, die auch die Symmetrieachse bzw. die Messachse für den Ultraschallmesskopf 32 ist, aus der Vertikalen in eine Schräglage bewegt wird.

Die Schlammspiegelsonden-Längsachse 38 ist die Messachse, auf die sich die Messung mit dem Ultraschallmesskopf 32 bezieht. Nur wenn die Längsachse 38 in einer Vertikalen steht und die Schlammspiegelsonde 30 in einer definierten Höhe hängt, kann aus den durch die Schlammspiegelsonde 30 gelieferten Entfernungs-Messwerten die Höhe des Schlammspiegels 40 über dem Boden 16 des Absetzbeckens 12 genau bestimmt werden. Der Raumlage-Messwert $\alpha$, das ist der Raumlage-Winkel zwischen einer Vertikalen 44 und der Schlammspiegelsonden-Längsachse 38, sollte nicht größer als 15° sein, um bei der Bestimmung der Höhe h bzw. der Entfernung des Schlammspiegels 40 noch ein hinreichend genaues Ergebnis zu erhalten.

Landseitig ist eine Steuervorrichtung 46 vorgesehen, die ein Auswertemodul 48 aufweist. Die Steuervorrichtung 46 und das Auswertemodul 48 sind über elektrische Daten- und Versorgungsleitungen mit der Schlammspiegelsonde 30 bzw. dem Ultraschallmesskopf 32 und dem Lagesensor 34 verbunden. Das Auswertemodul 48 empfängt kontinuierlich Messwerte des Ultraschallmesskopfes 32 und des Lagesensors 34.

In einem dem Auswertemodul 48 zugeordneten Grenzlagewert-Speicher ist ein Grenzlagewert $\alpha_G$ gespeichert, mit dem der von dem Lagesensor 34 übermittelte Raumlage-Messwert $\alpha$ ständig verglichen wird. Wenn der Raumlage-Messwert $\alpha$, also der durch den Lagesensor 34 ermittelte Winkel der Schlammspiegelsonden-Längsachse 38 zu der Vertikalen 44 den gespeicherten Grenzlagewert $\alpha_G$ überschreitet, werden die von dem Ultraschallmesskopf 32 gleichzeitig übermittelten Entfernungs-Messwerte einer weiteren Auswertung nicht zugeführt. Nur dann, wenn der von dem Lagesensor 34 übermittelte Raumlage-Messwert $\alpha$ unterhalb des Grenzlagewertes $\alpha_G$ liegt, werden die Entfernungs-Messwerte des Ultraschallmesskopfes 32 einer weiteren Auswertung zugeführt.

Die einer weiteren Auswertung zugeführten Entfernungs-Messwerte I' werden in dem Auswertemodul 48 zu dem korrigierten Entfernungs-Messwert I korrigiert nach der Beziehung:

$$I = I' \cdot \cos \alpha$$

Hierdurch wird sichergestellt, dass die Entfernungs-Messwerte I' bei einem Raumlage-Messwert $0 < \alpha < \alpha_G$ geometrisch korrigiert werden. Die Korrektur kann selbstverständlich auch durch Auslesen eines Korrekturwertes aus einem Kennfeld erfolgen. Auch der höhenmäßige Versatz des Ultraschallmesskopfes 32 bei Nicht-Vertikalität kann noch zusätzlich korrigiert werden.

Dem Auswertemodul 48 ist ein Zeitgeber zugeordnet, der gestartet wird, wenn der Raumlage-Messwert $\alpha$ jeweils erstmals den Grenzlagewert $\alpha_G$ überschreitet. Der Zeitgeber läuft dann eine festgelegte Zeitdauer, während der die Entfernungs-Messwerte des Ultraschallmesskopfes 32 einer weiteren Auswertung nicht zugeführt werden. Wenn nach der festgelegten Zeitdauer der Raumlage-Messwert $\alpha$ immer noch oberhalb des Grenzlagewertes $\alpha_G$ liegt, gibt das Auswertemodul 48 eine Fehlermeldung aus. Die festgelegte Zeitdauer ist so bemessen, dass die Schlammspiegelsonde 30 nach einer Kollision mit dem Räumbalken 22 bei normalem Betrieb längst wieder in eine ruhige Vertikalposition zurückgeschwenkt ist. Im Falle einer Fehlermeldung liegt daher möglicherweise eine dauerhafte Störung vor, die die Schlammspiegelsonde 30 dauerhaft außerhalb der Vertikalposition hält.

**Patentansprüche**

1. Schlammspiegelsonde (30) mit einem von einer Haltevorrichtung (26) nach unten hängenden und in eine Flüssigkeit (14) eintauchbaren Schlammspiegel-Ultraschallmesskopf (32), **dadurch gekennzeichnet,** **dass** dem Ultraschallmesskopf (32) ein Lagesensor (34) zugeordnet ist, der einen Raumlage-Messwert ($\alpha$) des Ultraschallmesskopfes (32) bestimmt, der der Winkel zwischen einer Vertikalen (44) und der Schlammspielgelsonden-Messachse (38) ist wobei die Schlammspiegelsonden-Messachse die Messachse ist, auf die sich die Messung mit dem Ultraschallmesskopf (32) bezieht.

2. Schlammspiegelsonde (30) nach Anspruch 1, wobei ein der Schlammspiegelsonde (30) zugeordnetes Auswertemodul (48) vorgesehen ist, das die von dem Ultraschallmesskopf (32) gelieferten Entfernungs-Messwerte nicht auswertet, wenn der von dem Lagesensor (34) gemeldete Raumlage-Messwert ($\alpha$) oberhalb eines in einem Grenzlagewert-Speicher abgelegten Grenzlagewertes ($\alpha_G$) liegt.

3. Schlammspiegelsonde (30) nach Anspruch 1 oder 2, wobei ein der Schlammspiegelsonde (30) zugeordnetes Auswertemodul (48) vorgesehen ist und das Auswertemodul (48) derart ausgebildet ist, dass der von dem Ultraschallmesskopf (32) gelieferte Entfernungs-Messwert (I') mit Hilfe des von dem Lagesensor (34) gelieferten Raumlage-Messwertes ($\alpha$) in einem Auswertemodul (48) korrigiert wird zu einem korrigierten Entfernungs-Messwert (I), nach der Beziehung:

$$I = I' \cdot \cos \alpha$$

4. Schlammspiegelsonde (30) nach Anspruch 2, **dadurch gekennzeichnet, dass** der Grenzlagewert ($\alpha_G$) maximal 25°, vorzugsweise maximal 15° beträgt.

5. Schlammspiegelsonde (30) nach Ansprüche 2 oder 4, **dadurch gekennzeichnet, dass** ein Zeitgeber vorgesehen ist, der durch das Überschreiten des Grenzlagewertes ($\alpha_G$) gestartet wird und eine festgelegte Zeitdauer läuft, und ein Auswertemodul (48) vorgesehen ist, das eine Fehlermeldung ausgibt, wenn nach der festgelegten Zeitdauer der Raumlage-Messwert ($\alpha$) oberhalb des Grenzlagewertes ($\alpha_G$) liegt.

6. Sedimentationsanlage (10) mit einem Absetzbecken (12), einem Balkenräumer (18) und einer Ultraschall-Schlammspiegelsonde (30) nach einem der Ansprüche 1 - 5, wobei die Schlammspiegelsonde (30) in das Absetzbecken (12) hineingehängt ist.

7. Verfahren zum Bestimmen des Schlammspiegels in einem Absetzbecken (12) einer Sedimentationsanlage (10), die einen Balkenräumer (18) und eine Ultraschall-Schlammspiegelsonde (30) nach einem der Ansprüche 1 - 5 aufweist, die in das Absetzbecken (12) hineingehängt ist, mit den Verfahrensschritten:

   - kontinuierliche Bestimmung der Höhe h des Schlammspiegels (40) durch Auswertung der Entfernungs-Messwerte des Ultraschallmesskopfes (32),
   - kontinuierliche Bestimmung der Schlammspiegelsonden-Raumlage aus den Raumlage-Messwerten ($\alpha$) des Lagesensors (34),
   - Austasten der Entfernungs-Messwerte, wenn der Raumlage-Messwert ($\alpha$) einen festgelegten Grenzlagewert ($\alpha_G$) überschreitet.

8. Verfahren nach Anspruch 7, **gekennzeichnet durch** den Verfahrensschritt:
   Korrigieren des von dem Ultraschallmesskopf (32) gelieferten Entfernungs-Messwertes (I') mit Hilfe des von dem Lagesensor (34) gelieferten Raumlage-Messwertes ($\alpha$) zu einem korrigierten Entfernungs-Messwert (I), nach der Beziehung:

$$I = I' \cdot \cos \alpha$$

**Claims**

1. A sludge-level probe (30) comprising a sludge-level ultrasonic measuring head (32), suspended from a holding device (26) and arranged to be immersed into a liquid (14), **characterized in that** a positional sensor (34) is associated with the ultrasonic measuring head (32), the positional sensor determining a spatial-position measurement value ($\alpha$) of the ultrasonic measuring head (32) which is the angle between a vertical plane (44) and the measuring axis (38) of the sludge-level probe, wherein the measuring axis (38) of the sludge-level probe is the measuring axis to which the measurement performed with the ultrasonic measuring head (32) relates.

2. The sludge-level probe (30) according to claim 1, wherein an evaluation module (48) associated with the sludge-level probe (30) is provided, which is operative to evaluate distance measurement values supplied by the ultrasonic measuring head (32) unless the spatial-position measurement value ($\alpha$) reported by the positional sensor (34) is above a limiting position value ($\alpha_G$) stored in a limiting-position value memory.

**3.** The sludge-level probe (30) according to claim 1 or 2, wherein an evaluation module (48) associated with the sludge-level probe (30) is provided, and the evaluation module (48) is configured such that, with the aid of the spatial-position measurement value ($\alpha$) supplied by the positional sensor (34), the distance measurement value (I') supplied by the ultrasonic measuring head (32) is corrected to a corrected distance measurement value (I) according to the relation:

$$I = I' \cdot \cos \alpha.$$

**4.** The sludge-level probe (30) according to claim 2, **characterized in that** said limiting position value ($\alpha_G$) is 25° at most, preferably 15° at most.

**5.** The sludge-level probe (30) according to claim 2 or 4, **characterized in that** a timer is provided, which is started when a limiting position value ($\alpha_G$) is exceeded and which runs for a predetermined period of time; and an evaluation module (48) is provided which is operative to emit an error message if, after the predetermined period of time, the spatial-position measurement value ($\alpha$) is above the limiting position value ($\alpha_G$).

**6.** A sedimentation plant (10), comprising a sedimentation basin (12), a beam-type cleaner (18), and the ultrasonic sludge-level probe (30) according to one of claims 1 - 5, wherein the sludge-level probe (30) is suspended into the sedimentation basin (12).

**7.** A method for determining sludge levels in a sedimentation basin (12) of a sedimentation plant (10) comprising a beam-type cleaner (18) and the ultrasonic sludge-level probe (30) according to one of claims 1 - 5, the sludge-level probe being suspended into the sedimentation basin (12), the method comprising the following method steps:

- continuous determination of height h of the sludge level (40) by evaluation of the distance measurement values of the ultrasonic measuring head (32);
- continuous determination of a spatial position of the sludge-level probe from the spatial-position measurement values ($\alpha$) of the positional sensory (34); and
- masking-out the distance measurement values if the spatial-position measurement value ($\alpha$) exceeds a predetermined limiting position value ($\alpha$G).

**8.** The method according to claim 7, chaeracterized by the method step:
with the aid of the spatial-position measurement value ($\alpha$) supplied by the positional sensor (34), correcting the distance measurement value (I') supplied by the ultrasonic measuring head (32) to a corrected distance measurement value (I) according to the relation:

$$I = I' \cdot \cos \alpha.$$

**Revendications**

**1.** Sonde de niveau de boue (30) avec une tête de mesure à ultrasons (32) suspendu vers le bas d'un dispositif de support (26) et immersible dans une liquide (14),
**caractérisée en ce qu'**un capteur de position (34) est associé à la tête de mesure à ultrasons (32), le capteur déterminant une valeur mesurée ($\alpha$) de la position spatiale de la tête de mesure à ultrasons (32), qui est l'angle entre une ligne verticale (44) et l'axe de mesure (38) de la sonde de niveau de boue, l'axe de mesure (38) de la onde de niveau de boue étant l'axe de mesure auquel se réfère la mesure avec la tête de mesure à ultrasons (32).

**2.** Sonde de niveau de boue (30) selon la revendication 1, dans laquelle un module d'évaluation (48) associé à la tête de mesure à ultrasons (32) est prévu, le module n'évaluant pas les valeurs mesurées de distance fournies par la tête de mesure à ultrasons (32), si la valeur mesurée ($\alpha$) de la position spatiale signalé par le capteur de position (34) est supérieure à une valeur de position limite ($\alpha_G$) stockée dans une mémoire de valeurs de position limite.

**3.** Sonde de niveau de boue (30) selon la revendication 1 ou 2, dans laquelle un module d'évaluation (48) associé à la tête de mesure à ultrasons (32) est prévu, et ledit module d'évaluation (48) est conçu de sorte que la valeur mesurée de distance (I') fournie par la tête de mesure à ultrasons (32) est corrigée dans le module d'évaluation (48) à l'aide de la valeur mesurée ($\alpha$) de la position spatiale fournie par le capteur de position (34), pour obtenir une valeur mesurée de distance (I) corrigée, selon la relation:

$$I = I' \cdot \cos \alpha.$$

**4.** Sonde de niveau de boue (30) selon la revendication 2, **caractérisée en ce que** la valeur de position limite ($\alpha_G$) est 25° au maximum, de préférence 15° au maximum.

**5.** Sonde de niveau de boue (30) selon la revendication 2 ou 4, **caractérisée en ce qu'**un temporisateur est prévu, qui est initialisé par le dépassement de la valeur de position limite ($\alpha_G$) et marche pour une durée de temps définie, et **en ce qu'**un module d'évaluation (48) est prévu fournissant un message d'erreur si, après la durée de temps définie, la valeur mesurée ($\alpha$) de la position spatiale est supérieure à la valeur de position limite ($\alpha_G$).

**6.** Dispositif de sédimentation (10) avec un bassin de sédimentation (12), un racleur de type barre (18) et une sonde de niveau de boue (30) à ultrasons selon l'une quelconque des revendications 1 - 5, dans lequel la sonde de niveau de boue (30) est suspendue dans le bassin de sédimentation (12).

**7.** Procédé pour déterminer le niveau de boue dans un bassin de sédimentation (12) d'un dispositif de sédimentation (10) comprenant un racleur de type barre (18) et une sonde de niveau de boue (30) à ultrasons selon l'une quelconque des revendications 1 - 5, la sonde étant suspendue dans le bassin de sédimentation (12), le procédé comprenant les étapes suivantes:

> - la détermination continue de la hauteur h du niveau de boue (40) par évaluation des valeurs mesurées de distance (l') fournies par la tête de mesure à ultrasons (32),
> - la détermination continue de la position spatiale de la sonde de niveau de boue à partir des valeurs mesurées ($\alpha$) de la position spatiale fournies par le capteur de position (34),
> - la suppression des valeurs mesurées de distance, si la valeur mesurée ($\alpha$) de la position spatiale dépasse une valeur de position limite ($\alpha_G$) définie.

**8.** Procédé selon la revendication 7, **caractérisée par** l'étape suivante:
la correction de la valeur mesurée de distance (l') fournie par la tête de mesure à ultrasons (32) à l'aide de la valeur mesurée ($\alpha$) de la position spatiale fournie par le capteur de position (34), pour obtenir une valeur mesurée de distance (l) corrigée, selon la relation:

$$l = l' \cdot \cos \alpha.$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0901020 A2
- DE 3329215 A1
- EP 0437872 A2